# EUROPÄISCHE PATENTSCHRIFT

(11) **EP 3 797 569 B1**
(45) Veröffentlichungstag und Bekanntmachung des Hinweises auf die Patenterteilung: **28.01.2026**
(21) Anmeldenummer: 20186633.2
(22) Anmeldetag: 20.07.2020
(51) Int. Cl.: A01B 63/00, A01B 71/02, B60K 25/06, G05B 19/00

(54) **LANDWIRTSCHAFTLICHE ARBEITSMASCHINE UND VERFAHREN ZUM ANFAHREN**
AGRICULTURAL WORKING MACHINE AND METHOD FOR STARTING
MACHINE DE TRAVAIL AGRICOLE ET PROCÉDÉ DE DÉMARRAGE

(30) Priorität: 24.09.2019 DE 102019125635
(43) Veröffentlichungstag der Anmeldung: 31.03.2021
(73) Patentinhaber: CLAAS Tractor S.A.S., 78141 Vélizy-Villacoublay Cedex (FR)
(72) Erfinder: Bourry, Pierre, 72000 Le Mans (FR); Hegon, Jeremy, 78830 Fontenay Le Fleury (FR); Poliakoff, Nelly, 6060 Clermont (FR); Renaud, Jeremy, 27310 Bourg Achard (FR)
(74) Vertreter: CLAAS Gruppe

(56) Entgegenhaltungen:
- EP-A1- 3 175 693
- EP-A1- 3 396 478
- DE-A1- 102014 211 712
- DE-A1- 102017 223 141
- DE-A1- 4 239 530

## Beschreibung

Die Erfindung betrifft zunächst eine landwirtschaftliche Arbeitsmaschine, insbesondere Traktor mit einem Motor, einem von dem Motor antreibbaren Getriebe, einer von dem Getriebe antreibbaren Zapfwelle zum Antrieb eines Anbaugerätes, einer Steuervorrichtung zur Steuerung einer Drehzahl und/oder eines Drehmoments der Zapfwelle, wobei in einem angebauten Zustand des Anbaugeräts mittels der Steuervorrichtung mindestens ein gerätespezifischer Parameter des Anbaugeräts durch Rotation einer Antriebswelle des Anbaugeräts ermittelbar und die Drehzahl und/oder das Drehmoment der Zapfwelle in Abhängigkeit des mindestens einen ermittelten gerätespezifischen Parameters steuerbar ist (siehe EP 3 396 478 A1). Offenbart wird weiterhin ein Verfahren zum Anfahren des Anbaugeräts einer solchen Arbeitsmaschine.

Zapfwellen (auch: Nebenantrieb oder PTO) bei landwirtschaftlichen Arbeitsmaschinen wie Traktoren und deren Kupplungen sind üblicherweise für das Anfahren und Betreiben von Anbaugeräten mit spezifischen Massenträgheitsmomenten ausgelegt. Beim Anfahren von Anbaugeräten mit gegenüber dem Auslegungsfall geringerer Massenträgheit kann es zu Überlastung und Schäden an den Kupplungen kommen.

Um übermäßigen Verschleiß und kritische Betriebszustände zu vermeiden, schlägt EP 0 443 325 A1 vor, bei kritischen Werten die Zapfwellenkupplung mittels eines Steuerventils zu öffnen. DE 101 45 588 A1 schlägt eine Lasterkennung und eine Schlupfregelung während des Betriebs vor, um bei drohender Überlastung die Kupplung zu öffnen. DE 10 2011 102 525 A1 schlägt vor, die Zapfwellenkupplung durch das Anbaugerät über ein Bussystem zu steuern.

Der Erfindung liegt die Aufgabe zugrunde, die Steuerung der Zapfwelle zu verbessern.

Ausgehend von den bekannten Arbeitsmaschinen wird erfindungsgemäß vorgeschlagen, dass die Steuerung der Drehzahl und/oder des Drehmoments in einer Startphase des Betriebs des Anbaugeräts erfolgt. Dadurch, dass bei jedem Starten der Zapfwelle ein Geräteparameter ermittelt wird, kann die Steuereinheit automatisch auf ein beliebiges Anbaugerät reagieren und dieses entsprechend sanft angefahren. Der Vorteil ist dabei, dass eine vorherige Eingabe oder Abfrage des Anbaugerätetypes nicht erforderlich ist. Das schonende Anfahren eines jeden Anbaugerätes hat weiterhin den Vorteil, dass eine Standzeit der Zapfwellenkupplung verlängert wird, da deren Überlastung besonders beim Anfahren vermieden wird.

Vorzugsweise ist in einer erfindungsgemäßen Arbeitsmaschine der mindestens eine gerätespezifische Parameter ein Massenträgheitsmoment, ein Reibungsmoment und/oder ein Leistungsbedarf des Anbaugeräts. In einer solchen erfindungsgemäßen Arbeitsmaschine lässt sich der gerätespezifische Parameter besonders einfach aus der laufenden Überwachung der Betriebsparameter des Motors ermitteln.

Alternativ oder zusätzlich kann in einer erfindungsgemäßen Arbeitsmaschine der mindestens eine gerätespezifische Parameter eine Temperatur der Zapfwellenkupplung oder ein Trägheitsmoment des Antriebsstrangs einschließlich des Anbaugeräts sein.

Vorzugsweise wird in einer erfindungsgemäßen Arbeitsmaschine der mindestens eine Parameter an einer mit der Zapfwelle koppelbaren Antriebswelle des Anbaugeräts gemessen. Die Steuerung anhand der tatsächlichen Belastung - beispielsweise anhand von lokal gemessenen Dehnungen - des Anbaugeräts erlaubt eine Beurteilung und Berücksichtigung von konstruktiven Details des Anbaugeräts.

Vorzugsweise wird in einer erfindungsgemäßen Arbeitsmaschine der mindestens eine gerätespezifische Parameter während einer bestimmten Zeitdauer ermittelt. In einer solchen erfindungsgemäßen Arbeitsmaschine erfolgt die Steuerung unabhängig davon, ob die Startphase abgeschlossen ist. Eine Verzögerung der Steuerung durch eine langandauernde Startphase ist so vermieden.

Vorzugsweise wird in einer erfindungsgemäßen Arbeitsmaschine der gerätespezifische Parameter innerhalb eines bestimmten Drehwinkelbereichs ermittelt. In einer solchen erfindungsgemäßen Arbeitsmaschine erfolgt die Steuerung unabhängig davon, wie lange die Startphase andauert. Eine Fehlsteuerung durch einen vorzeitigen Abbruch der Messung ist so vermieden.

Vorzugsweise wird in einer erfindungsgemäßen Arbeitsmaschine der gerätespezifische Parameter beginnend mit der ausgehend von einem Stillstand ersten Bewegung der Antriebswelle des Anbaugeräts bzw. ausgehend von einem im Stillstand der Antriebswelle des Anbaugeräts vorliegenden Ausgangswinkel ermittelt. Die Steuerung anhand des tatsächlichen - ggf. verzögerten - Beginns der Bewegung des Anbaugeräts erlaubt eine Beurteilung und Berücksichtigung des Verschleißzustands der Zapfwelle und/oder der Kupplung.

Vorzugsweise weist eine erfindungsgemäße Arbeitsmaschine zwischen dem Getriebe und der Zapfwelle eine Kupplung auf. In einer solchen erfindungsgemäßen Arbeitsmaschine kann die Zapfwelle in Ruhe versetzt werden, wenn kein Anbaugerät angeschlossen ist oder wenn ein angeschlossenes Anbaugerät nicht ständig zugleich mit der Arbeitsmaschine betrieben werden soll.

Weiter vorzugsweise ist in einer solchen erfindungsgemäßen Arbeitsmaschine die Kupplung eine hydraulische Kupplung. Weiter vorzugsweise ist in einer solchen erfindungsgemäßen Arbeitsmaschine die Kupplung hydraulisch ansteuerbar. Weiter vorzugsweise ist in einer solchen erfindungsgemäßen Arbeitsmaschine die Kupplung mittels eines elektrisch angesteuerten Ventils ansteuerbar. Weiter vorzugsweise ist in einer solchen erfindungsgemäßen Arbeitsmaschine das Ventil ein Proportionalventil. Die hydraulische Ansteuerung hydraulischer Kupplungen in landwirtschaftlichen Arbeitsmaschinen mittels elektrisch angesteuerter Proportionalventile ist allgemein bekannt und bewährt.

Vorzugsweise weist eine erfindungsgemäße Arbeitsmaschine einen Drehzahlsensor an der Zapfwelle auf. In einer solchen erfindungsgemäßen Arbeitsmaschine kann die Drehzahl der Zapfwelle unmittelbar geregelt werden.

Vorzugsweise weist eine erfindungsgemäße Arbeitsmaschine mindestens einen Drehzahlsensor an einer Abtriebswelle des Getriebes auf. In einer solchen erfindungsgemäßen Arbeitsmaschine kann das auf das Anbaugerät ausgeübte Drehmoment anhand des Schlupf der Kupplung beurteilt werden.

Vorzugsweise weist eine erfindungsgemäße Arbeitsmaschine mindestens einen Drehzahlsensor zur Ermittlung einer Drehzahl des Motors auf. In einer solchen erfindungsgemäßen Arbeitsmaschine kann die Drehzahl des Motors unmittelbar geregelt werden.

Vorzugsweise weist eine erfindungsgemäße Arbeitsmaschine einen Drucksensor zur Ermittlung eines Ansteuerdrucks der hydraulischen Kupplung auf. In einer solchen erfindungsgemäßen Arbeitsmaschine kann der Ansteuerdruck der Kupplung unmittelbar geregelt werden.

Vorzugsweise wird in einer erfindungsgemäßen Arbeitsmaschine ausgehend von einem Stillstand der Antriebswelle des Anbaugeräts ein von der Zapfwelle übertragbares Antriebsmoment derart begrenzt, dass eine Drehzahl der Abtriebswelle einen Wert von *1000 U*/*min* nicht überschreitet. Die Steuerung anhand der tatsächlichen Bewegung des Anbaugeräts erlaubt eine Berücksichtigung konstruktiver Beschränkungen des Anbaugeräts.

Ausgehend von den bekannten Verfahren wird erfindungsgemäß vorgeschlagen, dass mittels der Steuerungsvorrichtung mindestens ein gerätespezifischer Parameter des Anbaugeräts ermittelt wird und die Drehzahl und/oder das Drehmoment der Zapfwelle in einer Startphase des Betriebs des Anbaugeräts in Abhängigkeit des ermittelten gerätespezifischen Parameters gesteuert wird. Das erfindungsgemäße Verfahren wird im Betrieb einer erfindungsgemäßen Arbeitsmaschine ausgeführt und zeichnet sich gleichermaßen durch deren vorstehend beschriebene Vorteile aus.

Vorzugsweise wird im Rahmen eines erfindungsgemäßen Verfahrens ein einmal ermittelter gerätespezifischer Parameter gespeichert und bei einem späteren, insbesondere nächsten Anfahrvorgang eines Anbaugeräts wiederverwendet. Die Wiederverwendung eines gespeicherten Parameters beschleunigt das erfindungsgemäße Verfahren.

Weiter vorzugsweise wird im Rahmen eines solchen erfindungsgemäßen Verfahrens anstelle des gespeicherten Parameters ein kontrollweise ermittelter, abweichender gerätespezifischer Parameter verwendet und für den wiederum nächsten Anfahrvorgang gespeichert. Die kontrollweise Ermittlung und der Vergleich mit dem gespeicherten gerätespezifischen Parameter erhöht die Betriebssicherheit des erfindungsgemäßen Verfahrens und gibt einen Hinweis auf Veränderungen des Anbaugeräts und/oder der Zapfwelle insbesondere durch Verschleiß.

Alternativ kann in einem erfindungsgemäßen Verfahren die Zapfwelle mit einem voreingestellten Parameter angefahren werden. Ein voreingestellter Parameter kann insbesondere einen Werkszustand eines Anbaugeräts repräsentieren. Ein solches erfindungsgemäßes Verfahren gibt durch Vergleich mit einem kontrollweise ermittelten Parameter einen Hinweis auf Verschleiß des Anbaugeräts. Alternativ kann ein voreingestellter Parameter einen sicheren Betriebspunkt bei maximalem Verschleiß repräsentieren. Ein solches erfindungsgemäßes Verfahren gibt durch Vergleich mit einem kontrollweise ermittelten Parameter einen Hinweis auf die verbleibende Nutzung des Anbaugeräts.

Die Erfindung wird nachstehend anhand eines Ausführungsbeispiels näher erläutert. Ein nicht dargestellter Traktor weist einen Motor, ein von dem Motor angetriebenes Getriebe, und eine über eine hydraulische Kupplung mit dem Getriebe verbundene Zapfwelle auf. Die Kupplung wird hydraulisch mittels eines elektrisch angesteuerten Proportionalventils angesteuert, das im stromlosen Zustand sperrt und mit steigender Stromstärke öffnet. Die Stromstärke wird durch Pulsweitenmodulation einer Steuerspannung geregelt.

Bei laufendem Motor wird an die ausgekuppelte Zapfwelle ein Mähaggregat angeschlossen. Die Zeichnungsfigur zeigt schematisch den zeitlichen Verlauf der Drehzahl 1 einer Abtriebswelle des Getriebes, der Öffnung 2 des Proportionalventils und der Drehzahl 3 der Zapfwelle nach Anschließen des Mähaggregates.

Mit einem Startkommando 4 wird zunächst in einer Füllphase 5 das Proportionalventil vollständig (zu 100 %) geöffnet und die Kupplung mit Hydrauliköl gefüllt. Nach einer voreingestellten Zeit wird die Öffnung 2 des Proportionalventils abhängig von der Betriebstemperatur des Hydrauliköls auf einen Wert zwischen 25 und 54 %, bei unter 40 °C auf 31 % abgesenkt.

Anschließend wird zum Momentenaufbau 6 die Öffnung 2 des Proportionalventils kontinuierlich solange erhöht, bis ein Losbrechen 7 der Zapfwelle und ein Beginn der Drehung des Mähaggregats erkannt werden. Hierzu werden die Drehzahl 3 und das Drehmoment an der Zapfwelle gemessen: Der Momentenaufbau 6 wird entweder nach einem voreingestellten Zeitraum oder einem vorbestimmten Drehwinkel beendet, oder wenn fünf Zahnradzähne an der Zapfwelle erkannt werden.

Zur anschließenden Momentensteigerung 8 wird die Öffnung 2 des Proportionalventils mit einer verminderten Steigung kontinuierlich solange erhöht, bis die Zapfwelle mit einer Drehzahl 3 von 30 *U*/*min* rotiert.

In einer anschließenden Regelphase 9 wird die Öffnung 2 des Proportionalventils zunächst vermindert und dann mit der Steigung der ersten Anstiegsphase bis zum Einkuppeln 10 der Zapfwelle weiter erhöht, also bis zu dem Zeitpunkt, in dem diese mit mindestens 98 % der Drehzahl 1 der Abtriebswelle des Getriebes rotiert. Die Regelphase 9 wird abgebrochen, wenn die Drehzahl 1 der Abtriebswelle des Getriebes über 1000 *U*/*min* oder die Drehzahl 3 der Zapfwelle über 150 *U*/*min,* bei einer Betriebstemperatur des Hydrauliköls unter 40 °*C* über 50 *U*/*min* ansteigt. Im Anschluss an die Regelphase 9 wird das Proportionalventil vollständig geöffnet.

Der gemessene Verlauf, Gradienten und Amplituden der Drehzahl 3 und des Drehmoments an der Zapfwelle werden als "Startstrategie" des Mähaggregats gespeichert und beim nächsten Start angewendet, um das Mähaggregat bestmöglich anzufahren.

Wird anstelle des Mähaggregats ein anderes Aggregat - beispielsweise ein Heuwender, ein Dungstreuer oder ein Futtermischwagen - an die Zapfwelle angeschlossen, so wird die Startstrategie des Mähaggregats verworfen und wie vorstehend eine für das neue Aggregat passende Startstrategie ermittelt.

### Bezugszeichenliste

- 1: Drehzahl der Abtriebswelle des Getriebes
- 2: Öffnung des Proportionalventils
- 3: Drehzahl der Zapfwelle
- 4: Startkommando
- 5: Füllphase
- 6: Momentenaufbau
- 7: Losbrechen
- 8: Momentensteigerung
- 9: Regelphase
- 10: Einkuppeln
- 11: Losbrechen

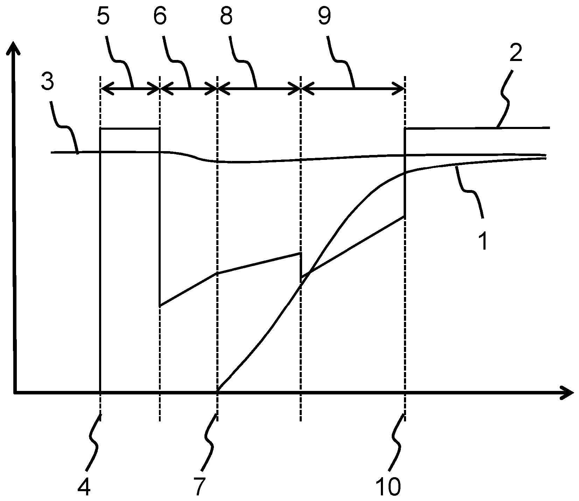

## Patentansprüche

1. Landwirtschaftliche Arbeitsmaschine, insbesondere Traktor mit
- einem Motor,
- einem von dem Motor antreibbaren Getriebe,
- einer von dem Getriebe antreibbaren Zapfwelle zum Antrieb eines Anbaugerätes,
- einer Steuervorrichtung zur Steuerung einer Drehzahl (3) und/oder eines Drehmoments der Zapfwelle, wobei in einem angebauten Zustand des Anbaugeräts mittels der Steuervorrichtung mindestens ein gerätespezifischer Parameter des Anbaugeräts durch Rotation einer Antriebswelle des Anbaugeräts ermittelbar und die Drehzahl (3) und/oder das Drehmoment der Zapfwelle in Abhängigkeit des mindestens einen ermittelten gerätespezifischen Parameters steuerbar ist,
**dadurch gekennzeichnet, dass**
die Steuerung der Drehzahl (3) und/oder des Drehmoments in einer Startphase des Betriebs des Anbaugeräts erfolgt,
die Arbeitsmaschine eine zwischen dem Getriebe und der Zapfwelle angeordnete hydraulische Kupplung umfasst, die hydraulisch ansteuerbar ist, vorzugsweise mittels eines elektrisch angesteuerten Ventils, vorzugsweise in Form eines Proportionalventils,
die Arbeitsmaschine Folgendes umfasst:
- einen Drehzahlsensor an der Zapfwelle und/oder
- mindestens einen Drehzahlsensor an einer Abtriebswelle des Getriebes und/oder
- mindestens einen Drehzahlsensor zur Ermittlung einer Drehzahl des Motors,
- einen Drucksensor zur Ermittlung eines Ansteuerdrucks der hydraulischen Kupplung.

2. Arbeitsmaschine nach Anspruch 1,
**dadurch gekennzeichnet, dass**
der mindestens eine gerätespezifische Parameter ein Massenträgheitsmoment des Anbaugeräts und/oder ein Reibungsmoment des Anbaugeräts und/oder ein Leistungsbedarf des Anbaugeräts jeweils gemessen an einer mit der Zapfwelle koppelbaren Antriebswelle des Anbaugeräts ist.

3. Arbeitsmaschine nach Anspruch 2,
**dadurch gekennzeichnet, dass**
der mindestens eine gerätespezifische Parameter während einer bestimmten Zeitdauer vorzugsweise beginnend mit der ausgehend von einem Stillstand ersten Bewegung der Antriebswelle des Anbaugeräts und/oder innerhalb eines bestimmten Drehwinkelbereichs vorzugsweise ausgehend von einem im Stillstand der Antriebswelle des Anbaugeräts vorliegenden Ausgangswinkel ermittelbar ist.

4. Arbeitsmaschine nach einem der Ansprüche 1 bis 3,
**dadurch gekennzeichnet, dass**
ausgehend von einem Stillstand der Antriebswelle des Anbaugeräts ein von der Zapfwelle übertragbares Antriebsmoment so begrenzbar ist, dass eine Drehzahl (1) einer Abtriebswelle des Getriebes auf einen Wert von 1000 *U*/*min* begrenzbar ist.

5. Verfahren zum Anfahren eines mit einer Zapfwelle einer landwirtschaftlichen Arbeitsmaschine, insbesondere eines Traktors, gekoppelten Anbaugeräts, wobei die Arbeitsmaschine
- einen Motor,
- ein von dem Motor antreibbares Getriebe,
- eine von dem Getriebe antreibbare Zapfwelle zum Antrieb des Anbaugeräts und
- eine Steuerungsvorrichtung zum Steuern einer Drehzahl (3) und/oder eines Drehmoments der Zapfwelle
und das Arbeitsgerät
- eine mit der Zapfwelle der landwirtschaftlichen Arbeitsmaschine gekoppelte Antriebswelle
aufweist, wobei mittels der Steuerungsvorrichtung die Drehzahl (3) und/oder das Drehmoment der Zapfwelle in Abhängigkeit von Vorgaben gesteuert wird,
**dadurch gekennzeichnet, dass**
mittels der Steuerungsvorrichtung mindestens ein gerätespezifischer Parameter des Anbaugeräts ermittelt wird und die Drehzahl (3) und/oder das Drehmoment der Zapfwelle in einer Startphase des Betriebs des Anbaugeräts in Abhängigkeit des ermittelten gerätespezifischen Parameters gesteuert wird,
die Arbeitsmaschine eine zwischen dem Getriebe und der Zapfwelle angeordnete hydraulische Kupplung umfasst, die hydraulisch ansteuerbar ist, vorzugsweise mittels eines elektrisch angesteuerten Ventils, vorzugsweise in Form eines Proportionalventils,
die Arbeitsmaschine Folgendes umfasst:
- einen Drehzahlsensor an der Zapfwelle und/oder
- mindestens einen Drehzahlsensor an einer Abtriebswelle des Getriebes und/oder
- mindestens einen Drehzahlsensor zur Ermittlung einer Drehzahl des Motors,
- einen Drucksensor zur Ermittlung eines Ansteuerdrucks der hydraulischen Kupplung.

6. Verfahren nach Anspruch 5,
**dadurch gekennzeichnet, dass**
ein einmal ermittelter gerätespezifischer Parameter gespeichert und bei einem späteren, insbesondere nächsten Anfahrvorgang eines Anbaugeräts wiederverwendet wird, es sei denn, dass sich durch eine kontrollweise Ermittlung desselben gerätespezifischen Parameters ergibt, dass dieser von dem gespeicherten Parameter abweicht, woraufhin ein abweichender Parameter für die Steuerung verwendet und für den wiederum nächsten Anfahrvorgang gespeichert wird.

## Claims

1. An agricultural working machine, in particular a tractor, with
- an engine,
- a transmission which can be driven by the engine,
- a power take-off shaft which can be driven by the transmission in order to drive a mounted implement,
- a control device for controlling a rotational speed (3) and/or a torque of the power take-off shaft, wherein, in a mounted state of the mounted implement, at least one implement-specific parameter of the mounted implement can be determined, by means of the control device, by rotation of a drive shaft of the mounted implement, and the rotational speed (3) and/or the torque of the power take-off shaft can be controlled as a function of the at least one determined implement-specific parameter,
**characterized in that**
the control of the rotational speed (3) and/or of the torque is carried out in a start-up phase of the operation of the mounted implement,
the working machine comprises a hydraulic clutch which can be controlled hydraulically, preferably by means of an electrically controlled valve, preferably in the form of a proportional valve, disposed between the transmission and the power take-off shaft, the working machine comprises:
- a rotational speed sensor on the power take-off shaft, and/or
- at least one rotational speed sensor on an output shaft of the transmission, and/or
- at least one rotational speed sensor for determining a rotational speed of the engine,
- a pressure sensor for determining a control pressure of the hydraulic clutch.

2. The working machine according to claim 1,
**characterized in that**
the at least one implement-specific parameter is a mass moment of inertia of the mounted implement and/or a frictional torque of the mounted implement and/or a power requirement of the mounted implement, respectively measured on a drive shaft of the mounted implement which can be coupled to the power take-off shaft.

3. The working machine according to claim 2,
**characterized in that**
the at least one implement-specific parameter can be determined during a specific period of time, preferably beginning with the first movement of the drive shaft of the mounted implement starting from a standstill, and/or within a specific rotational angle range, preferably starting from an initial angle present when the drive shaft of the mounted implement is at a standstill.

4. The working machine according to one of claims 1 to 3, **characterized in that**
starting from a standstill of the drive shaft of the mounted implement, a drive torque which can be transmitted by the power take-off shaft can be limited in a manner such that a rotational speed (1) of an output shaft of the transmission can be limited to a value of 1000 rpm.

5. A method for starting up a mounted implement coupled to a power take-off shaft of an agricultural working machine, in particular a tractor, wherein the working machine has
- an engine,
- a transmission which can be driven by the engine,
- a power take-off shaft which can be driven by the transmission in order to drive the mounted implement, and
- a control device for controlling a rotational speed (3) and/or a torque of the power take-off shaft,
and the working implement has
- a drive shaft which is coupled to the power take-off shaft of the agricultural working machine,
wherein the rotational speed (3) and/or the torque of the power take-off shaft is controlled as a function of instructions by means of the control device,
**characterized in that**
at least one implement-specific parameter of the mounted implement is determined by means of the control device and the rotational speed (3) and/or the torque of the power take-off shaft is controlled in a start-up phase of the operation of the mounted implement as a function of the determined implement-specific parameter,
the working machine comprises a hydraulic clutch which can be controlled hydraulically, preferably by means of an electrically controlled valve, preferably in the form of a proportional valve, disposed between the transmission and the power take-off shaft, the working machine comprises the following:
- a rotational speed sensor on the power take-off shaft, and/or
- at least one rotational speed sensor on an output shaft of the transmission, and/or
- at least one rotational speed sensor for determining a rotational speed of the engine,
- a pressure sensor for determining a control pressure of the hydraulic clutch.

6. The method according to claim 5,
**characterized in that**
an implement-specific parameter, determined once, is stored and used again in a later, in particular the next, procedure for starting up a mounted implement, unless it is revealed by a verification-type determination of the same implement-specific parameter that this differs from the stored parameter, whereupon a different parameter is used for the control and in turn is stored for the next start-up procedure.

## Revendications

1. Machine de travail agricole, en particulier tracteur, comprenant
- un moteur,
- une transmission pouvant être entraînée par le moteur,
- une prise de force pouvant être entraînée par la transmission et destinée à entraîner un outil attelé,
- un dispositif de commande destiné à commander une vitesse de rotation (3) et/ou un couple de la prise de force, sachant que dans un état monté de l'outil attelé, le dispositif de commande permet de déterminer au moins un paramètre spécifique à l'outil de l'outil attelé, par rotation d'un arbre d'entraînement de l'outil attelé, et la vitesse de rotation (3) et/ou le couple de la prise de force peut être commandé(e) en fonction du paramètre spécifique à l'outil, au nombre d'au moins un, qui a été déterminé,
**caractérisée en ce que**
la commande de la vitesse de rotation (3) et/ou du couple s'effectue au cours d'une phase de démarrage du fonctionnement de l'outil attelé,
la machine de travail comprend un accouplement hydraulique qui est disposé entre la transmission et la prise de force et peut être activé par voie hydraulique, de préférence au moyen d'un distributeur à activation électrique, de préférence sous la forme d'un distributeur proportionnel,
la machine de travail comprend les éléments suivants :
- un capteur de régime sur la prise de force et/ou
- au moins un capteur de régime sur un arbre de sortie de la transmission et/ou
- au moins un capteur de régime pour déterminer une vitesse de rotation du moteur,
- un capteur de pression pour déterminer une pression d'activation de l'accouplement hydraulique.

2. Machine de travail selon la revendication 1,
**caractérisée en ce que**
le paramètre spécifique à l'outil, au nombre d'au moins un, est un moment d'inertie de masse de l'outil attelé et/ou un moment de frottement de l'outil attelé et/ou un besoin de puissance de l'outil attelé, mesurés respectivement sur un arbre d'entraînement de l'outil attelé qui peut être accouplé à la prise de force.

3. Machine de travail selon la revendication 2,
**caractérisée en ce que**
le paramètre spécifique à l'outil, au nombre d'au moins un, peut être déterminé pendant une durée définie, commençant de préférence avec le premier mouvement de l'arbre d'entraînement de l'outil attelé, en partant d'un arrêt, et/ou à l'intérieur d'une plage d'angles de rotation définie, partant de préférence d'un angle initial présent à l'arrêt de l'arbre d'entraînement de l'outil attelé.

4. Machine de travail selon une des revendications 1 à 3,
**caractérisée en ce que**
partant d'un arrêt de l'arbre d'entraînement de l'outil attelé, un couple d'entraînement pouvant être transmis par la prise de force peut être limité de manière telle qu'une vitesse de rotation (1) d'un arbre de sortie de la transmission puisse être limitée à une valeur de 1000 t/min.

5. Procédé de démarrage d'un outil attelé qui est accouplé à une prise de force d'une machine de travail agricole, en particulier d'un tracteur, la machine de travail comprenant
- un moteur,
- une transmission pouvant être entraînée par le moteur,
- une prise de force pouvant être entraînée par la transmission et destinée à entraîner l'outil attelé, et
- un dispositif de commande destiné à commander une vitesse de rotation (3) et/ou un couple de la prise de force,
et l'outil de travail comprenant
- un arbre d'entraînement accouplé à la prise de force de la machine de travail agricole,
le dispositif de commande permettant de commander la vitesse de rotation (3) et/ou le couple de la prise de force, en fonction de consignes,
**caractérisé en ce que**
le dispositif de commande permet de déterminer au moins un paramètre spécifique à l'outil de l'outil attelé, et la vitesse de rotation (3) et/ou le couple de la prise de force est commandé(e) au cours d'une phase de démarrage du fonctionnement de l'outil attelé, en fonction du paramètre spécifique à l'outil qui a été déterminé,
la machine de travail comprend un accouplement hydraulique qui est disposé entre la transmission et la prise de force et peut être activé par voie hydraulique, de préférence au moyen d'un distributeur à commande électrique, de préférence sous la forme d'un distributeur proportionnel,
la machine de travail comprend les éléments suivants :
- un capteur de régime sur la prise de force et/ou
- au moins un capteur de régime sur un arbre de sortie de la transmission et/ou
- au moins un capteur de régime pour déterminer un régime du moteur,
- un capteur de pression pour déterminer une pression d'activation de l'accouplement hydraulique.

6. Procédé selon la revendication 5,
**caractérisé en ce que**
une fois déterminé, un paramètre spécifique à l'outil est mémorisé et est réutilisé lors d'une opération de démarrage ultérieure, en particulier l'opération suivante, d'un outil attelé, à moins qu'il ne ressorte d'une détermination, à titre de contrôle, du même paramètre spécifique à l'outil, que celui-ci s'écarte du paramètre mémorisé, à la suite de quoi un paramètre différent est utilisé pour la commande et mémorisé à son tour pour l'opération de démarrage suivante.
